# EUROPEAN PATENT SPECIFICATION

(11) **EP 3 683 508 B1**
(45) Date of publication and mention of the grant of the patent: **07.06.2023**
(21) Application number: 20151595.4
(22) Date of filing: 14.01.2020
(51) Int. Cl.: F24D 11/02, F24D 19/10, F25B 30/06, F24D 3/18, F24D 10/00

(54) **HYBRID HEATING SYSTEM CONTAINING A HEAT PUMP UNIT**
HYBRIDES HEIZSYSTEM MIT EINER WÄRMEPUMPENEINHEIT
SYSTÈME DE CHAUFFAGE HYBRIDE CONTENANT UNE UNITÉ DE POMPE À CHALEUR

(30) Priority: 15.01.2019 FI 20195024
(43) Date of publication of application: 22.07.2020
(73) Proprietor: HögforsGST Oy, 79100 Leppävirta (FI)
(72) Inventor: HARTMAN, Antti, 15560 Nastola (FI)
(74) Representative: Kespat Oy

(56) References cited:
- WO-A1-2017/086871
- WO-A2-2011/105881

## Description

The object of the invention is a hybrid heating system, which includes
o a primary circuit of a primary heat generator, comprising in parallel at least one service water heat exchanger and one heating circulation heat exchanger to be heated with the primary heat,
o a heating circuit circulating circulation water in a controllable manner at the points of consumption via said heat exchanger heated with the primary heat,
o a heat pump unit comprising a compressor, an expansion valve, an evaporator and a condenser and connected so as to utilize a selected heat source with the evaporator as well as to simultaneously emit a secondary heat with the condenser in parallel with said primary heat heat exchanger, wherein said heat source comprises at least one exhaust air heat exchanger and one cooling radiator.

Often a chilled service water heat exchanger is connected in series to a service water heat exchanger and a heating circulation heat exchanger, so that the circulation of returning chilled service water is connected between said upper and lower service water heat exchangers.

In particular in larger facilities, it makes sense to use, in addition to district heating, a heat pump whose heat source is, for example, geothermal energy or exhaust air. As the contracts regarding the supply of district heating invariably include stipulations e.g. pertaining to a minimum cooling of district-heating water, this limits the utilization of heat pumps.

Finnish Energy (Energiateollisuus ry) has released statements regarding the installation of exhaust air heat pumps (EAHP) in buildings with district heating: Workgroup on heat usage 30.10.2017; "Exhaust air heat pumps (EAHP) in buildings with district heating; guidelines for planners". The release proposes example configurations (hybrid 1 and hybrid 2). The release proposes optionally guiding the heating of the heat pump to the chilled service water heating if any heat is left over after the heating of the heating circulation.

The situation arises in particular in summertime in buildings that there is no heat consumption, but there is a need for cooling. For this purpose, condensers are often typically mounted on the roof of the building as a heat sink for the heat pump so that the latter is able to generate a cooling. So-called roof-top units are known, in which exhaust air in the incoming-air/exhaust-air unit to be mounted on the roof can act either as a heat source in a heat recovery function as well as as a heat sink in a cooling function. The coupling of such a unit to another system is not practical, because the integration benefit of the unit is then lost completely.

The function of the invention is to provide a novel system for allowing the production of a cooling also in cases where there is no actual heat sink. The hybrid system according to the invention is characterized by what is proposed in the claims.

In the system in accordance with the invention, the primary heat can be generated in different ways - district heating is merely one application. An electric boiler can also be mentioned as a typical primary heat generator. By heat dumping, the removal of excess heat from the system is meant.

The solution in accordance with the invention is easily scaled, as, for example, a plurality of exhaust air heat exchangers can be connected in parallel, for example, in an apartment building in which each section has its own exhaust-air line to the roof. There can also be a plurality of heat pumps and other components in parallel.

Moreover, a geothermal system can also be utilized both in the normal manner as well as in certain new ways (see further down).

The invention is explained in the following with reference to certain advantageous embodiments of the attached figures. It is not intended to limit the invention exclusively to these embodiments in any way.
- Figure 1: shows a basic configuration of a hybrid system using district heating and utilizing exhaust-air heat by means of a heat pump in a conventional exhaust-air heat recovery mode
- Figure 2: shows the system of Figure 1, which produces a cooling by means of the heat pump, as there is no conventional heat sink (dumping mode)
- Figure 3: shows a piping combination belonging to optional flow configuration systems
- Figure 4: illustrates a free flow separator

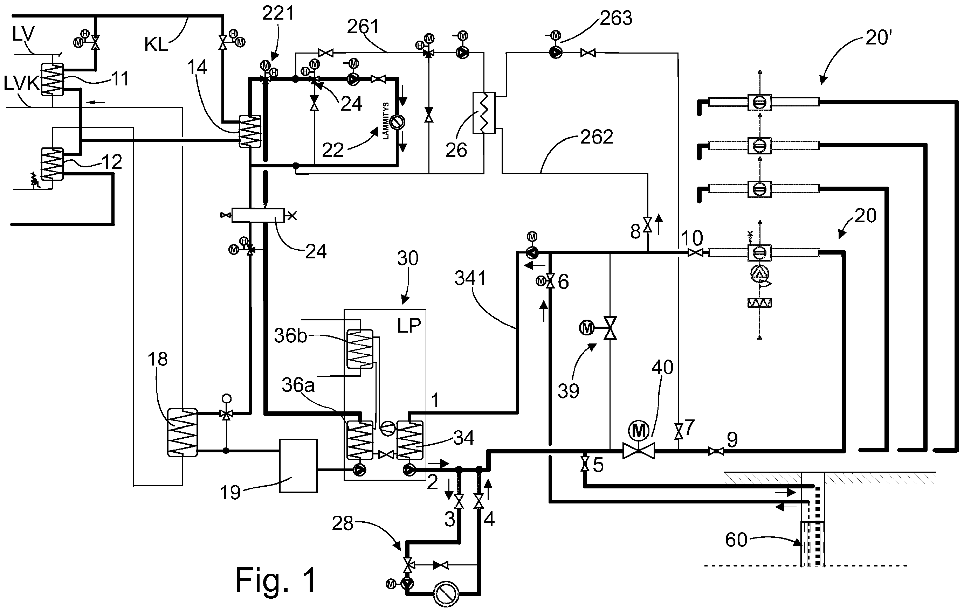

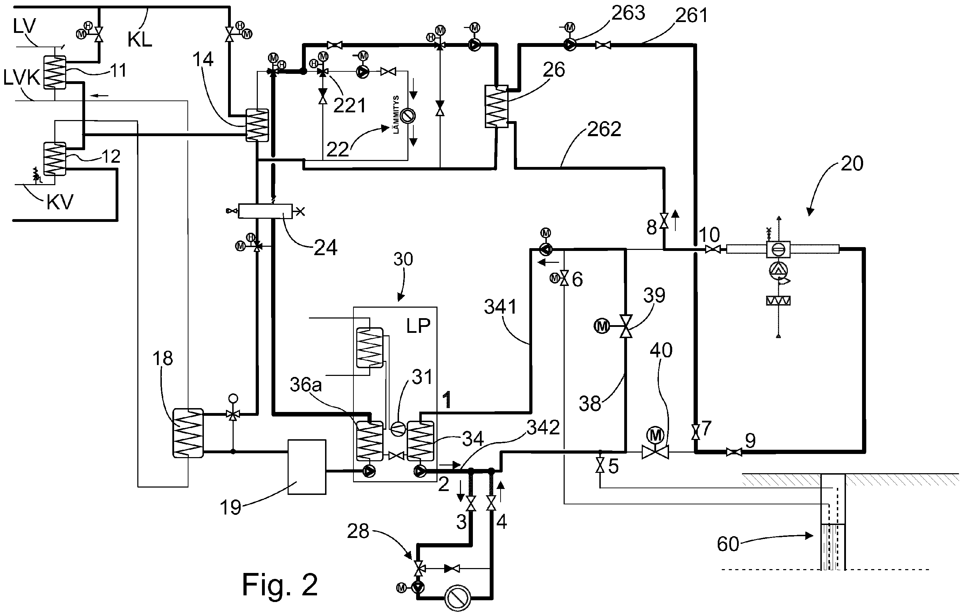

The basis of the system of Figures 1 and 2 is, first, a basic configuration that utilizes district heat in a conventional manner, which includes a district-heat primary circuit heating in parallel an upper i.e. hot service water heat exchanger 11 and a heating circulation heat exchanger 14 as well as a lower i.e. chilled service water heat exchanger 12 connected cooperatively in series to the upper i.e. hot service water heat exchanger (11), in which the returning service water circulation HWC (LVK) is connected between the upper i.e. hot service water heat exchanger 11 and the lower i.e. chilled service water heat exchanger 12. A conventional system includes a heating circuit 22 which circulates circulation water in a controlled manner via the heat exchanger 14 of said district heating. A component known *per se* is the heat pump circuit 30 comprising a compressor 31, an expansion valve 32, an evaporator 34 and a condenser 36a, connected so as to utilize by means of its evaporator a selected external heat source, here the exhaust-air apparatus 20, as well as to emit heat by means of its condenser 36a in parallel with said district-heat heat exchanger 14 in a selected manner. The returning flow runs via a tank 19, which evens the flow.

The so-called free flow separator 24 is an optional component, in which the input of the load of the heating circuit from the heat exchanger 14, its output, the input of the auxiliary heating from the condenser 36a and the output of the auxiliary heating are joined to a same space. With the help of this flow component, the circulation flow of the load circuit is not disturbed by the supply flow of the auxiliary heating, but rather it is possible to transfer a volume flow essentially commensurate with the load flow from the inflow of the auxiliary heating.

Figure 1 depicts exhaust air heat exchangers 20'. The system can be easily utilized in connection with a plurality of exhaust-air points. For example, there is an exhaust air heat exchanger in the connection of each section of an apartment building, which are connected in parallel. It is possible to use all separately existing outlets this way.

Designated in the heat pump circuit 30 in Figures 1 and 2 is a first condenser 36b for utilizing the heat quantity of a superheated medium. The exploitation of this superheating is not essential from the standpoint of this invention.

In this connection, the heat pump circuit 30 utilizes the exhaust air with the help of the apparatus 20. From the pressure side of the evaporator 34 (coupling 2), a glycol fluid is guided directly (valve 40 open, valve 39 closed) to the exhaust air heat exchanger 20 in heat recovery operation, whereupon the glycol fluid is heated, the thermal energy of which is transferred to the evaporator 30 via the circuit 341. Alternatively, other available heat sources can also be used, especially a geothermal well 60. The heat pump is connected here to an exhaust-air apparatus by an indirect evaporator. The configuration can also comprise direct evaporation, wherein coolant circulates directly in the exhaust-air radiator or another heat source. By glycol, a suitable medium is meant here, generally either ethanol, propylene or ethylene glycol.

Modes in which the heat pump is not in operation can also be used in the system. By means of pumps and exhaust-air apparatus, glycol is circulated via an exhaust-air radiator, a geothermal well 60 and a heat exchanger 34 (not in operation). This way, the geothermal well becomes a heat store for the heat obtained from the exhaust air.

The low temperature of the glycol leaving the evaporator 34 enables its evaporation in the cooling radiator 28, which is connected as a so-called parasite configuration by means of its own pump to the same line (couplings 3 and 4). There is no use for auxiliary circuit 261 and thermal energy outlet circuit 262 in the heat recovery mode.

Figure 2 conversely shows the case where there is very little heat consumption in the building, but a cooling is required. The heating of the building (heating circuit 22) does not include any heating output of the heat pump at all and the heating of the service water also only includes a small output. The generation of cooling requires the emission of a quantity of heat at a high temperature. It is thus necessary to find a discrete location in the system for the emission of heat in such situations. For this reason, parallel to the heating circuit 22, an auxiliary circuit 261 with its own pump 263 is installed, which emits heat via the heat exchanger 26 to the thermal energy outlet circuit 262.

Now the stopcock 39 of the circulation line 38 is open and the stopcock 40 of the line 342 is closed. In this case, the exhaust air heat exchanger 20 is also connected to the thermal energy outlet circuit 262 of the dumping heat exchanger 26. This way, exhaust air is exceptionally heated in the exhaust air heat exchanger 20, which renders possible a cooling of essentially the same magnitude.

The evaporator 34 generates cold solely for the cooling radiator 28. A geothermal well 60 may be present in the circulation loop in certain situations if it is able to take in heat.

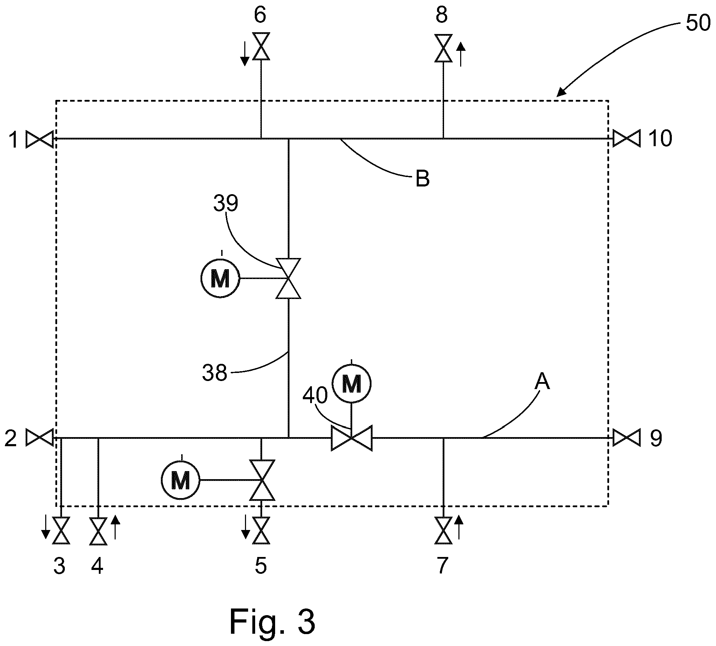

Figure 3 shows a piping combination, which has manifolds or main lines A and B as well as a circulation line 38 between them, which is closable by a valve 39. In addition, there is a stopcock 40 in at least one of the main lines A, B. The piping combination 50 is advantageously formed as a component equipped with its own frame (dashed line).

The couplings 1 and 2 are connected to the evaporator and the couplings 9 and 10 are connected to the exhaust air heat exchanger. The couplings 3 and 4 are connected to the cooling radiator and the couplings 5 and 6 are connected to the dumping circuit. The couplings of the geothermal well are optional.

The system includes a valve control system with which the stop-cocks 39, 40 are used for realizing the modes of operation.

The temperature levels of the heat pump fluctuate in accordance with output requirements. If the need for heating is small, then the exhaust air heats the collection circuit to warmer than normal. The temperature level also fluctuates in accordance with need on the side of the load.

A cooling circuit is hooked up in the exhaust-air heat-recovery configuration when the building has a need for heating at the same time as a need for a slight cooling. In this case, a dumping does not occur and the heat pump simultaneously cools the cooling circuit and the exhaust air. This is, however, a rare situation.

Geothermal heating acts during a certain period of time as a large cold/heat store - thus in series with the cooling circuit 3-4. Cooling can be realized solely by means of a geothermal well. When it is saturated, the heat pump is then turned on.

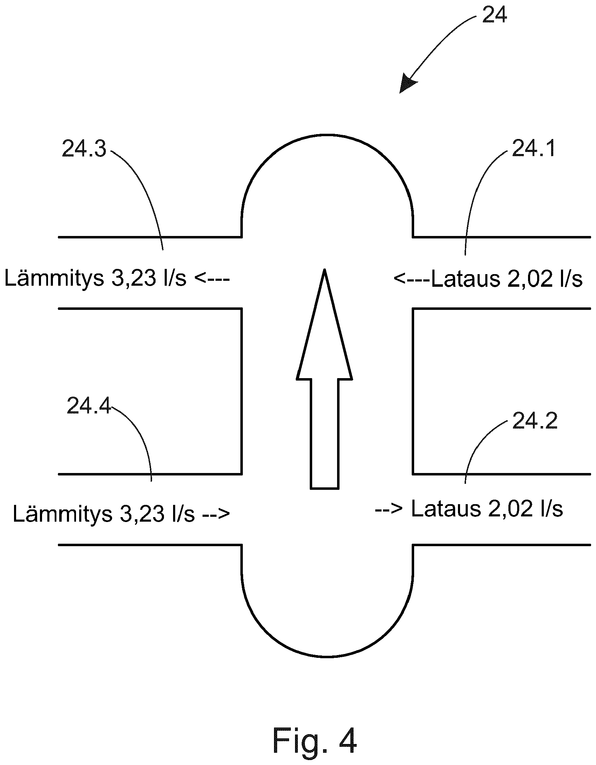

Figure 4 shows a free flow separator 24, in which the heating-circuit load input 24.1, its output 24.2, the auxiliary heating input 24.4 and the auxiliary heating output 24.3 are joined to the same space. By means of this flow component, the circulation flow of the load circuit is not disturbed by the supply flow of the auxiliary heating, but rather it is possible to transfer a volume flow essentially commensurate with the load flow from the inflow of the auxiliary heating. This component as well as the form of the primary heating are in any case in no way central to this invention.

## Claims

1. A hybrid heating system, which includes
o a primary circuit of a primary heat generator, comprising in parallel at least one upper i.e. hot service water heat exchanger (11) and one heating circulation heat exchanger (14) to be heated with the primary heat, and a lower i.e. chilled service water heat exchanger (12) advantageously connected in series together with the upper i.e. hot service water heat exchanger (11), so that the circulation of returning service water (HWC) is connected between the upper i.e. hot service water heat exchanger (11) and the lower i.e. chilled service water heat exchanger (12),
o a heating circuit (22) circulating circulation water in a controllable manner at the points of consumption via said heating circulation heat exchanger (14) heated with the primary heat,
o a heat pump unit (30) comprising a compressor (31), an expansion valve (32), an evaporator (34) and a condenser (36a, 36b) and connected so as to utilize a selected heat source with the evaporator (34) as well as to simultaneously emit a secondary heat with the condenser (36a) in parallel with said heating circulation heat exchanger (14), wherein said heat source comprises at least one exhaust air heat exchanger (20) and one cooling radiator (28),
**characterized in that** the system includes,
• in parallel with the heating circulation heating circuit (22), a heat-dumping heat exchanger (26) for discharging heat to a specific thermal energy outlet circuit (262) when there is no consumption at said points of consumption,
• flow configuration means adapted to connect said exhaust air heat exchanger (20) either
a) as a heat source for the evaporator (34) of the heat pump (HP), or
b) to connect said exhaust air heat exchanger (20) to said thermal energy outlet circuit (262) of the dumping heat exchanger (26) as a heat sink, and simultaneously to connect the cooling radiator (28) as a heat source for the evaporator (34).

2. The hybrid heating system according to claim 1, **characterized in that** the cooling radiator (20) is connected to an outlet-side line (342) of the evaporator (34) as a so-called parasite configuration, so that its inlet and return lines (3, 4) join the outlet-side pipe at a distance from one another and the circulation circuit (281) of the cooling radiator (28) is equipped with its own pump (282).

3. The hybrid heating system according to claim 1 or 2, **characterized in that** the optional flow configuration systems include a piping combination (50), which has
• a first manifold (A) to be connected by one end (2) to an outlet-side line (342) of the evaporator (34) and by the other end (9) to the return line of the exhaust air heat exchanger (20) and the manifold (A) has a first stopcock (40) for segregating the ends into different circuits
• a second manifold (B) to be connected by one end (1) to a return line (341) of the evaporator (34) and by its other end (10) to the outlet-side line of the exhaust air heat exchanger (20),
• the piping combination includes a circulation connection (38), between the first and second manifold (A, B) and joining the latter, equipped with a second stopcock (39), as well as the manifold couplings (3, 4, 5, 6, 7, 8) adapted to optionally form the following operations with the piping combination:
- the coupling of the evaporator (34) by the throughflow connection to the exhaust air heat exchanger (20) as a heat source, or
- two circuits comprising a cooling radiator (28) connected to the evaporator (34) as a first circuit and to said thermal energy outlet circuit (262) of the dumping heat exchanger (26) as the heat sink of the connected exhaust air heat exchanger (20) as a second circuit.

4. The hybrid heating system according to claim 3, **characterized in that** the piping combination (50) is formed as a component equipped with its own frame.

5. The hybrid heating system according to any one of claims 1 - 4, **characterized in that** the system includes at least one geothermal well (60) or another geothermal circuit connected to the circulation circuit of the evaporator (34).

6. The hybrid heating system according to claim 5, **characterized in that** the geothermal well (60) is adapted to act as a heat store in order to take in energy generated by the cooling in at least one load situation.

7. The hybrid heating system according to any one of claims 1 - 6, **characterized in that** the medium of the evaporator circuit is one of the following: ethanol, propylene glycol or ethylene glycol.

## Patentansprüche

1. Hybrides Heizsystem, das folgendes enthält:
o einen Primärkreislauf eines primären Wärmeerzeugers, parallel umfassend mindestens einen oberen d. h. Brauchwarmwasser-Wärmetauscher (11) und einen Heizkreislauf-Wärmetauscher (14), die mit der Primärwärme zu beheizen sind, und einen unteren d. h. Brauchkaltwasser-Wärmetauscher (12), der vorteilhafterweise in Reihe geschaltet ist mit dem oberen d. h. Brauchwarmwasser-Wärmetauscher (11), sodass der Kreislauf des zurückfließenden Brauchwassers (HWC) zwischen dem oberen d. h. Brauchwarmwasser-Wärmetauscher (11) und dem unteren d. h. Brauchkaltwasser-Wärmetauscher (12) angeschlossen ist,
o einen Heizkreislauf (22), der über den mit der Primärwärme beheizten Heizkreislauf-Wärmetauscher (14) steuerbar Zirkulationswasser an den Verbrauchsstellen umwälzt,
o eine Wärmepumpeneinheit (30), die einen Kompressor (31), ein Expansionsventil (32), einen Verdampfer (34) und einen Kondensator (36a, 36b) umfasst und so angeschlossen ist, dass sie eine ausgewählte Wärmequelle mit dem Verdampfer (34) nutzt und gleichzeitig eine Sekundärwärme mit dem Kondensator (36a) parallel mit dem Heizkreislauf-Wärmetauscher (14) abgibt, wobei die Wärmequelle mindestens einen Abluftwärmetauscher (20) und einen Kühlradiator (28) umfasst,
**dadurch gekennzeichnet, dass** das System Folgendes enthält:
• parallel zum Heizkreislauf (22) einen Wärmeabgabe-Wärmetauscher (26), um Wärme an einen spezifischen Wärmeenergie-Ausgabekreislauf (262) abzugeben, wenn an den Verbrauchsstellen kein Verbrauch stattfindet,
• Strömungskonfigurationsmittel, die geeignet sind, den Abluftwärmetauscher (20) entweder
a) als eine Wärmequelle für den Verdampfer (34) der Wärmepumpe (HP) anzuschließen, oder
b) den Abluftwärmetauscher (20) an den Wärmeenergie-Ausgabekreislauf (262) des Wärmeabgabe-Wärmetauschers (26) als Wärmesenke anzuschließen und gleichzeitig den Kühlradiator (28) als eine Wärmequelle für den Verdampfer (34) anzuschließen.

2. Hybrides Heizsystem nach Anspruch 1, **dadurch gekennzeichnet, dass** der Kühlradiator (20) als sogenannte Parasitenkonfiguration an eine ausgangsseitige Leitung (342) des Verdampfers (34) angeschlossen ist, so dass seine Zu- und Rücklaufleitungen (3, 4) mit Abstand zueinander in die ausgangsseitige Leitung münden und der Umwälzkreislauf (281) des Kühlradiators (28) mit einer eigenen Pumpe (282) ausgestattet ist.

3. Hybrides Heizsystem nach Anspruch 1 oder 2, **dadurch gekennzeichnet, dass** die optionalen Strömungskonfigurationssysteme eine Rohrleitungskombination (50) enthalten, die folgendes aufweist:
• einen ersten Verteiler (A), der mit einem Ende (2) an eine ausgangsseitige Leitung (342) des Verdampfers (34) und mit dem anderen Ende (9) an die Rücklaufleitung des Abluftwärmetauschers (20) anzuschließen ist, wobei der Verteiler (A) einen ersten Absperrhahn (40) zum Trennen der Enden in verschiedene Kreisläufe aufweist
• einen zweiten Verteiler (B), der mit einem Ende (1) an eine Rücklaufleitung (341) des Verdampfers (34) und mit seinem anderen Ende (10) an die ausgangsseitige Leitung des Abluftwärmetauschers (20) anzuschließen ist,
• die Rohrleitungskombination enthält einen Zirkulationsanschluss (38) zwischen dem ersten und dem zweiten Verteiler (A, B), der letztere verbindet und mit einem zweiten Absperrhahn (39) ausgestattet ist, sowie die Verteilerkupplungen (3, 4, 5, 6, 7, 8), die geeignet sind, mit der Rohrleitungskombination optional die folgenden Vorgänge zu bilden:
- das Koppeln des Verdampfers (34) über den Durchflussanschluss an den Abluftwärmetauscher (20) als Wärmequelle, oder
- zwei Kreisläufe umfassend einen Kühlradiator (28), der mit dem Verdampfer (34) als erstem Kreislauf und mit dem Wärmeenergie-Ausgabekreislauf (262) des Wärmeabgabe-Wärmetauschers (26) als Wärmesenke des angeschlossenen Abluftwärmetauschers (20) als zweitem Kreislauf verbunden ist.

4. Hybrides Heizsystem nach Anspruch 3, **dadurch gekennzeichnet, dass** die Rohrleitungskombination (50) als eine Komponente mit eigenem Rahmen ausgebildet ist.

5. Hybrides Heizsystem nach einem der Ansprüche 1 bis 4, **dadurch gekennzeichnet, dass** das System mindestens einen geothermischen Brunnen (60) oder einen anderen geothermischen Kreislauf einschließt, der an den Umwälzkreislauf des Verdampfers (34) angeschlossen ist.

6. Hybrides Heizsystem nach Anspruch 5, **dadurch gekennzeichnet, dass** der geothermische Brunnen (60) so beschaffen ist, dass er als Wärmespeicher fungiert, um die durch die Kühlung erzeugte Energie in mindestens einer Lastsituation aufzunehmen.

7. Hybrides Heizsystem nach einem der Ansprüche 1 bis 6, **dadurch gekennzeichnet, dass** das Medium des Verdampferkreislaufs eines der folgenden ist: Ethanol, Propylenglykol oder Ethylenglykol.

## Revendications

1. Système de chauffage hybride, qui contient
o le circuit principal d'un générateur de chaleur principal, comprenant, en parallèle, au moins un échangeur de chaleur supérieur, c'est-à-dire pour l'eau de service chaude (11) et un échangeur de chaleur pour la circulation de l'eau de chauffage (14) qui seront chauffés par la chaleur principale, et un échangeur de chaleur inférieur, c'est-à-dire pour l'eau de service froide (12) relié en série de manière avantageuse à l'échangeur de chaleur supérieur, c'est-à-dire pour l'eau de service chaude (11), de sorte que l'eau de service de retour (circulation de l'eau chaude) circule entre l'échangeur de chaleur supérieur, c'est-à-dire pour l'eau de service chaude (11) et l'échangeur de chaleur inférieur, c'est-à-dire pour l'eau de service froide (12),
o un circuit de chauffage (22) faisant circuler l'eau d'une manière contrôlable au niveau des points de consommation via ledit échangeur de chaleur pour la circulation de l'eau de chauffage (14) chauffée par la chaleur principale,
o un système de pompe à chaleur (30) comprenant un compresseur (31), un détendeur (32), un évaporateur (34) et un condenseur (36a, 36b) et connecté de façon à utiliser une source de chaleur sélectionnée avec l'évaporateur (34) ainsi qu'à émettre simultanément une chaleur secondaire avec le condenseur (36a) en parallèle dudit échangeur de chaleur pour la circulation de l'eau de chauffage (14), dans lequel ladite source de chaleur comprend au moins un échangeur de chaleur de l'air évacué (20) et un radiateur de refroidissement (28),
**caractérisé en ce que** le système comprend,
• en parallèle du circuit de chauffage pour la circulation de l'eau de chauffage (22), un échangeur de chaleur à libération de chaleur (26) permettant de décharger la chaleur dans un circuit de refoulement d'énergie thermique spécifique (262) lorsqu'aucune consommation n'est enregistrée au niveau desdits points de consommation,
• des moyens de configuration du débit adaptés pour raccorder ledit échangeur de chaleur de l'air évacué (20) soit
a) en tant que source de chaleur pour l'évaporateur (34) de la pompe à chaleur (HP), soit
b) pour connecter ledit échangeur de chaleur de l'air évacué (20) audit circuit de refoulement d'énergie thermique (262) de l'échangeur de chaleur à libération (26) en tant que source de froid, et simultanément pour connecter le radiateur de refroidissement (28) en tant que source de chaleur pour l'évaporateur (34).

2. Système de chauffage hybride conformément à la revendication 1, **caractérisé en ce que** le radiateur de refroidissement (20) est connecté à une conduite côté refoulement (342) de l'évaporateur (34) en tant que configuration dite « parasite », de sorte que ses conduites d'aspiration et de retour (3, 4) rejoignent le tuyau côté refoulement à une certaine distance l'un de l'autre, et le circuit de circulation (281) du radiateur de refroidissement (28) est équipé de sa propre pompe (282).

3. Système de chauffage hybride conformément à la revendication 1 ou 2, **caractérisé en ce que** les systèmes optionnels de configuration du débit comprennent une combinaison de tuyaux (50), comprenant
• un premier collecteur (A) à raccorder à une extrémité (2) à une conduite côté refoulement (342) de l'évaporateur (34) et à l'autre extrémité (9) à la conduite de retour de l'échangeur de chaleur de l'air évacué (20), le collecteur (A) étant doté d'un premier robinet d'arrêt (40) pour séparer les extrémités en différents circuits
• un deuxième collecteur (B) à raccorder à une extrémité (1) à une conduite de retour (341) de l'évaporateur (34) et à l'autre extrémité (10) à la conduite côté refoulement de l'échangeur de chaleur de l'air évacué (20),
• la combinaison de tuyaux comprend un raccordement de circulation (38), équipé d'un deuxième robinet d'arrêt (39), reliant le premier et le deuxième collecteurs (A, B), ainsi que des raccords de collecteur (3, 4, 5, 6, 7, 8) adaptés pour effectuer en option les opérations suivantes avec la combinaison de tuyaux :
- le raccordement de l'évaporateur (34), par le raccordement de débit, à l'échangeur de chaleur de l'air évacué (20) en tant que source de chaleur, ou
- deux circuits comprenant un radiateur de refroidissement (28) raccordé à l'évaporateur (34) en tant que premier circuit et audit circuit de refoulement d'énergie thermique (262) de l'échangeur de chaleur à libération (26) en tant que source de froid de l'échangeur de chaleur de l'air évacué raccordé (20) en tant que deuxième circuit.

4. Système de chauffage hybride conformément à la revendication 3, **caractérisé en ce que** la combinaison de tuyaux (50) constitue un composant équipé de son propre châssis.

5. Système de chauffage hybride conformément à l'une quelconque des revendications 1 à 4, **caractérisé en ce que** le système comprend au moins un puits géothermique (60) ou un autre circuit géothermique raccordé au circuit de circulation de l'évaporateur (34).

6. Système de chauffage hybride conformément à la revendication 5, **caractérisé en ce que** le puits géothermique (60) est adapté pour faire office d'accumulateur de chaleur afin d'accumuler l'énergie générée par le refroidissement dans au moins une situation de charge.

7. Système de chauffage hybride conformément à l'une quelconque des revendications 1 à 6, **caractérisé en ce que** le fluide du circuit de l'évaporateur est l'un des suivants : éthanol, propylène glycol ou éthylène glycol.
